# EUROPEAN PATENT APPLICATION

(11) **EP 2 550 932 A1**
(43) Date of publication of application: **30.01.2013**
(21) Application number: 11175796.9
(22) Date of filing: 28.07.2011
(51) Int. Cl.: A61C 15/04

(54) **Handling aid for dental floss**

(71) Applicant: The Procter & Gamble Company, Cincinnati, OH 45202 (US)
(72) Inventor: Herzog, Karl, 60489 Frankfurt (DE)
(74) Representative: Joos, Uta Susanne

(57) **Abstract**

A dental floss comprising a first connecting element and a second connecting element wherein the connecting elements interact to form a connecting assembly and thereby form a loop of dental floss. This dental floss can be used for forming a dental floss loop by engaging the first connecting element and the second connecting element.

## Description

### FIELD OF THE INVENTION

The invention relates to a handling aid for dental floss and particularly to a dental floss comprising a first connecting element and a second connecting element wherein the connecting elements interact to enable a dental floss loop to be formed.

### BACKGROUND OF THE INVENTION

Dental floss is a well-known article used to promote oral hygiene by aiding in the removal of particles lodged in the interproxminal areas of the teeth. In interdental spaces, the tooth surfaces are best freed from plaque by means of dental floss. The surface of conventional dental floss is generally smooth and is sometimes waxed. This makes it difficult for an individual to hold the floss during use because it can not be tightly grasped and slips between the user's fingers. The handling of conventional dental floss is thus difficult.

Often floss is purchased and packaged in a container/dispenser having an internal chamber for securely holding a large continuous length of floss wrapped around a spool or bobbin. A length of floss can be drawn and separated from the spooled portion remaining within the container. The floss emerges through a slit on the top of the container and can be separated from the bobbin by a cutting device. For a typical example see USD0339426. To floss the teeth, a person usually wraps the ends of the floss round the forefinger of each hand to be able to impose tension on a short length of the floss to thereby squeeze it between teeth and manipulate it to remove plaque. This can become painful if the floss is wrapped too tightly, or when the floss becomes taut during use. The resulting constriction of the fingers is unpleasant, and the fingers may remain constricted during the cleaning of a complete set of teeth. Furthermore, lack of control of the floss can lead to cutting of the gums. The chances of this happening increase when the floss in moistened by saliva as the friction between a user's fingers and the floss decreases if the surfaces are moistened. The dental floss can then slip.

Accordingly, an object of the invention is the provision of a device that eliminates the need to wrap the floss round the fingers and which allows the user to effectively control the tension of the floss. It is known in the art that it is desirable for floss to form a closed loop so that tension may be applied on or at a selected portion of the loop that is inserted between the teeth. When utilising a dental floss loop, the fingers need only be constricted during the cleaning of one interdental space. When switching to the next interdental space, the constriction is interrupted as the user moves the floss. Additionally, as this brings into engagement, with the interdental spaces, a different region of the dental floss loop, excessive local use of the floss is avoided. In US4550741, flexible strands are closed by a joining means, and in US5947132 a plurality of flossing loops are connected to form a cascade of loops, provided in a dispenser. US5799673 discloses dental floss with finger loops. A plurality of lengths of floss is provided, each having a finger loop at each end. The lengths of floss are removably connected to each other to form a single continuous piece and are stored within a dispenser. US5086792 provides dental floss loops provided by a pair of parallel strands secured to a pair of gripping elements. However, there remains a need to find a more efficient way of forming a dental floss loop from a continuous dental floss strand.

It is the goal of the invention to facilitate the handling of the dental floss by providing a dental floss connecting assembly. The connecting assembly allows the formation of a dental floss loop from a continuous strand of floss, enabling tension to be maintained in the floss throughout its use. The handling is considerably simpler than with conventional dental floss, because the tightening occurs without the need to create additional friction by wrapping the floss around the user's fingers.

### SUMMARY OF THE INVENTION

The present invention provides dental floss comprising a first connecting element and a second connecting element wherein the connecting elements interact to form a connecting assembly and thereby form a loop of dental floss.

The invention further provides a use of this dental floss for forming a dental floss loop by engaging the first connecting element and the second connecting element.

### BRIEF DESCRIPTION OF THE DRAWINGS

Figure 1 shows a longitudinal section of a dental floss connecting assembly.
Figure 2 shows a length of dental floss with inner and outer connecting elements disposed along it.
Figure 3 shows a dental floss loop with engaged connecting elements.
Figure 4 shows a length of dental floss with identical connecting elements disposed along it.
Figure 5 shows a longitudinal section of an alternative dental floss connecting assembly.
Figure 6 shows a cross section in plane B - B of the dental floss connecting assembly of Figure 5.
Figure 7 shows a longitudinal section of a dental floss connecting assembly.
Figure 8 shows a length of dental floss with inner and outer connecting elements attached to the floss via an alternative means.

### DETAILED DESCRIPTION OF THE INVENTION

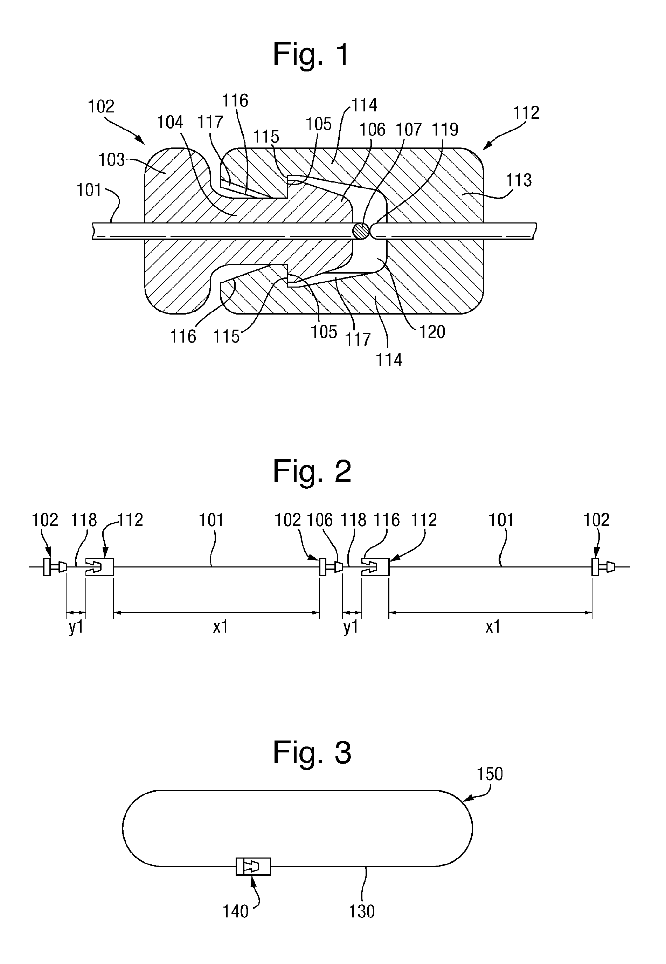

Referring first to a first embodiment of the invention and to Figures 1-3, a dental floss 101 comprises a first connecting element 102. The first, or inner, connecting element 102 preferably has a circular cross section and preferably comprises an outer bulge portion 103, a neck 104, a shoulder 105 and a conical frustum 106. A connecting element may be defined as an element capable of engaging with a second element in order to form a dental floss loop.

The dental floss 101 further comprises a second, or outer, connecting element 112. The outer connecting element 112 preferably comprises an outer bulge portion 113, two flexible arms 114, two clasps 115 and two bevels 116. The outer bulge portion of the second connecting element 112 may be cylindrical. One or both of the flexible arms 114 may comprise a rib 117 in order to prevent lateral displacement of the connecting elements 102, 112. Additionally, one or both of the clasps 115 and bevels 116 may each comprise a rib 117 which functions as a secondary protection against lateral displacement of the connecting elements 102, 112.

The first and second connecting elements are preferably made from a thermoplastic material by means of injection molding which simultaneously fastens the elements on the dental floss 101. A length of dental floss can be fed from a spool that rotates around a spindle. Support rollers can guide and support the floss until it is directed through the mould. Following injection and cooling, the floss comprising the moulded plastic parts can then be fed onto a second spool by support rollers. The thermoplastic material may be selected from polyethylene, polyethylene, polypropylene, terephthalate, polyamide, polyoxymethylene and mixtures thereof. Preferably the plastic material is selected from polyamide, polyoxymethylene and mixtures thereof. The injection mould may comprise only two mould halves. The application of plastic parts on dental floss via injection molding is known in the art. For one such example see US6544457.

The connecting elements 102 and 112 are alternately arranged on the dental floss 110. Preferably there is a first distance x1 between the bulges of the first and second connecting elements 102, 112. This distance is preferably from 200 mm to 400 mm. Preferably there is a second distance y1 between the conical frustum 106 of the first connecting element and the bevels 116 of the second connecting element. This distance is preferably from 10 mm to 100 mm. The user can cut the dental floss 101 between the conical frustum 106 and the bevels 116 at a location 118 by means of a non-illustrated knife, which may be fastened to a dental floss container. This creates a dental floss piece 130 of the length x1 between the connecting elements 102, 112. Thus the formation of a dental floss loop is facilitated. Preferably distances x1 of from 200 mm to 400 mm between the first and second connecting elements alternate with distances y1 of 10 mm to 100 mm between the first and second connecting elements to facilitate the formation of a dental floss loop.

The user can push together and thus engage the connecting elements 102, 112 of the dental floss piece 130 in a manner as shown in Figure 1 to form a connecting assembly 140. This creates a dental floss loop 150. The free dental floss ends 107, 119 are laterally guided out of the second connecting element 112 in a space 120, (Figure 1). The conical frustum 106 and the bevels 116 facilitate pushing the connecting elements 102 and 112 together. The user inserts the narrow end of the conical frustum 106 into the wide end of the bevels 116. The incline of both the conical frustum and the bevel facilitate bending the arms 114 when the connecting elements 102, 112 are pushed together. Once the connecting elements 102, 112 are engaged, the user should not be able to pull them apart.

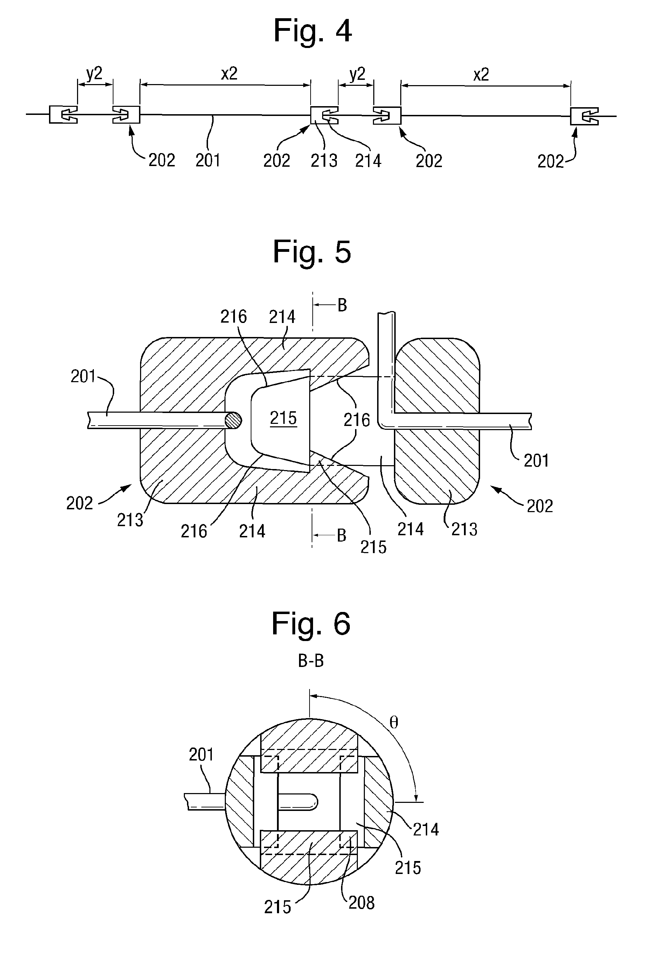

A second embodiment of the invention is illustrated in Figures 4 to 6. The dental floss 201 comprises identical first and second connecting elements 202. Each connecting element 202 comprises a bulge 213 and two flexible arms 214. The connecting elements 202 are arranged on the dental floss 201 as illustrated in Figure 4. A first distance x2 of from 200 mm to 400 mm is preferably located between the bulges 213 of opposing connecting elements and a second distance y2 of 10 mm to 100 mm is preferably located between the end of the arms 214 of opposing connecting elements. Preferably distances x2 of from 200 mm to 400 mm between the first and second connecting elements alternate with distances y2 of 10 mm to 100 mm between the first and second connecting elements to facilitate the formation of a dental floss loop. The user can cut the dental floss 201 within the second distance y2.

The connecting elements 202 preferably have a circular cross section. The flexible arms 214 comprise a clasp 215 and four bevels 216.

The user can push together two connecting elements 202 to form a dental floss connecting assembly in order to create a dental floss loop. The bevels 216 facilitate the deformation of the flexible arms to form a connecting assembly. When the two connecting elements 202 are engaged, the clasps 215 overlap at four zones 208 thereby locking the two connecting elements 202 together. In the engaged position the two connecting elements 202 are at an angle θ of approximately 90°. Once the connecting elements 202 are engaged, the user should not be able to pull them apart.

The connecting elements 202 may be made from a thermoplastic plastic material by means of injection molding which thereby fastens the elements on the dental floss 201 in the same manner as described above for the first embodiment of the invention.

Within the distance y1, or y2 of either embodiment of the invention, the dental floss may feature a mark, for example by means of color or by thermal deformation of the dental floss. This mark shows the user where to separate or cut the dental floss. This deters the user from cutting the dental floss within the distance x1 or x2.

Both embodiments of the invention enable the user to form a dental floss loop. The user can tighten the dental floss loop between two fingers and can thus remove the plaque in the interdental space. The handling is considerably simpler than with conventional dental floss, because the tightening occurs without the need to create additional friction by wrapping the floss around the user's fingers. Furthermore, the fingers are only constricted during the cleaning of one interdental space. When switching to the next interdental space, the constriction is interrupted. In the event that the dental floss loop is too large, the user can shorten it by using a third finger.

The dental floss of the present invention may be provided as a continuous length of floss wrapped around a spool. This may be further packaged in a dispenser. Alternatively, the dental floss of the present invention may be provided and packaged as a series of individual strands of floss comprising a first connecting element at a first end and a second connecting element at a second end.

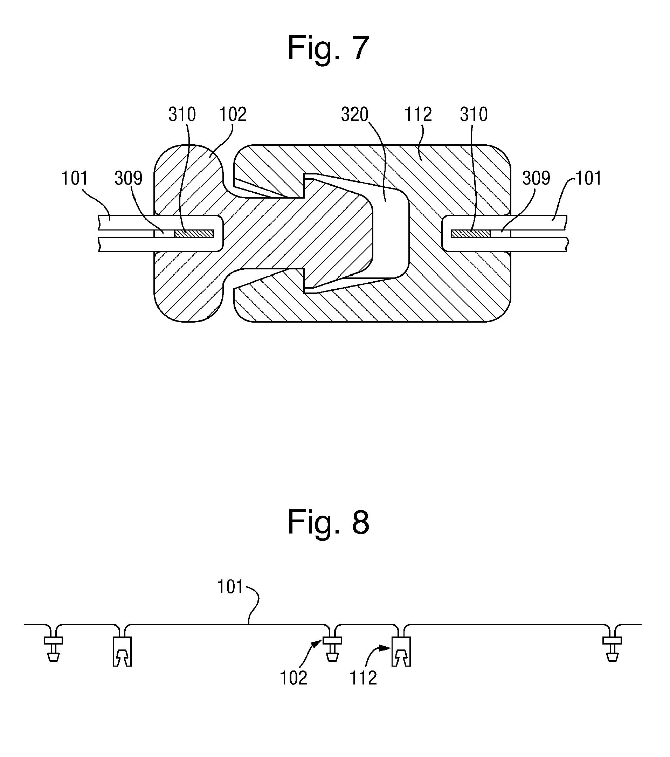

As an alternative to injection molding, the connecting elements 102, 112 and 202 may be attached to the dental floss in an alternative manner. Referring to Figures 7 and 8, the connecting elements 102 and 112, or 202 comprise a blind hole 309, in which the dental floss 101, 201 is fastened by means of an anchor plate 310. This method of attaching the connecting element to the dental floss resembles the stapling of toothbrushes where tufts of bristles are fixed into holes on a plastic plate by means of metallic anchor plates. See for example EP0840561. In this embodiment, the space 320 between the connecting elements 102 and 112 may be smaller than the space 120, because it is not necessary to guide free dental floss ends out of it.

A cushioning strip of a soft material, which may be elastic, can be located between the dental floss and the anchor plate 310 in order to protect the dental floss from being cut by the anchor plate which may comprise sharp edges.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

### DESCRIPTION OF REFERENCE NUMERALS

- 101: Dental floss of embodiment 1
- 102: First connecting element
- 103: Outer bulge portion
- 104: Neck
- 105: Shoulder
- 106: Conical frustum
- 107: Free dental floss end
- 112: Second connecting element
- 113: Outer bulge portion
- 114: Flexible arm of embodiment 1
- 115: Clasp of embodiment 1
- 116: Bevel of embodiment 1
- 117: Rib
- x1: First distance of embodiment 1
- y1: Second distance of embodiment 1
- 118: Location
- 119: Free dental floss end
- 120: Space
- 130: Dental floss piece
- 140: Connecting assembly
- 150: Dental floss loop
- 201: Dental floss of embodiment 2
- 202: Connecting elements of embodiment 2
- 213: Bulge of embodiment 2
- 214: Flexible arms of embodiment 2
- x2: First distance of embodiment 2
- y2: Second distance of embodiment 2
- 215: Clasp of embodiment 2
- 216: Bevels of embodiment 2
- 208: Zone
- θ: Angle
- 309: Blind hole
- 310: Anchor Plate
- 320: Space

## Claims

1. Dental floss (101) comprising a first connecting element (102) and a second connecting element (112) wherein the connecting elements interact to form a connecting assembly and thereby form a loop of dental floss.

2. Dental floss according to Claim 1 wherein the first connecting element (102) is shaped to fit inside the second connecting element (112).

3. Dental floss according to Claim 1 or 2 wherein the dental floss comprises a plurality of first and second elements and wherein the first and second connecting elements are alternately arranged on the dental floss (101).

4. Dental floss according to either Claim 2 or Claim 3 wherein the first connecting element (102) has a circular cross section and further comprises a bulge portion (103), a neck (104), a shoulder (105) and a conical frustum (106).

5. Dental floss according to any of Claims 2 to 4 wherein the second connecting element (112) further comprises a bulge portion (113), and at least one flexible arm (114), the arm further comprising at least one clasp (115) and at least one bevel (116).

6. Dental floss according to Claim 5 wherein the arm (114) further comprises a rib (117) and wherein the clasp (115) and bevel (116) each further comprise a rib (117).

7. Dental floss according to Claim 1 wherein the first and second connecting elements comprise a bulge portion (213) and at least one flexible arm (214), the arm further comprising at least one clasp (215) and at least one bevel (216).

8. Dental floss according to any preceding claim wherein distances (x1, x2) of from 200 mm to 400 mm between the first and second connecting elements alternate with distances (y1, y2) of 10 mm to 100 mm between the first and second connecting elements.

9. Dental floss according to any preceding claim wherein the connecting elements (102, 112, 202) are made of thermoplastic material.

10. Dental floss according any preceding claim wherein the connecting elements (102, 112, 202) are fastened to the dental floss by means of injection molding.

11. Dental floss according any of claims 1-9 wherein the connecting elements (102, 112, 202) comprise a blind hole (309), in which the dental floss is fastened by means of an anchor plate (310).

12. Dental floss according to Claim 11 wherein a cushioning strip is located between the dental floss and the anchor plate (310).

13. Dental floss according to any preceding claim wherein the dental floss is provided as a continuous length of floss wrapped around a spool.

14. Dental floss according to Claim 13 wherein the dental floss is contained within a dispenser.

15. Use of the dental floss according to any preceding claim for forming a dental floss loop (150) by engaging two connecting elements to form a dental floss connecting assembly.
